# EUROPEAN PATENT SPECIFICATION

(11) **EP 4 408 241 B1**
(45) Date of publication and mention of the grant of the patent: **08.10.2025**
(21) Application number: 22782571.8
(22) Date of filing: 07.09.2022
(51) Int. Cl.: A47J 31/00, A47J 31/36, A47J 31/52

(54) **MACHINE FOR DISPENSING AN INFUSION BEVERAGE AND RELATED METHOD**
MASCHINE ZUR AUSGABE EINES INFUSIONSGETRÄNKS UND ZUGEHÖRIGES VERFAHREN
MACHINE DE DISTRIBUTION DE BOISSON INFUSÉE ET PROCÉDÉ ASSOCIÉ

(30) Priority: 27.09.2021 IT 202100024674
(43) Date of publication of application: 07.08.2024
(73) Proprietor: LELIT S.R.L., 25045 Castegnato (Brescia) (IT)
(72) Inventor: EPIS, Mauro, 25045 Castegnato, BRESCIA (IT)
(74) Representative: Chimini, Francesco
(86) International application number: PCT/IB2022/058393
(87) International publication number: WO 2023/047225

(56) References cited:
- EP-A1- 2 314 183
- WO-A1-2015/124592
- WO-A1-2021/005570

## Description

The present invention relates to a machine and a method for dispensing an infusion beverage, such as coffee, chamomile, tea or herbal tea, in particular for domestic use. The document WO 2021/005570 A1 discloses a machine for dispensing an infusion beverage, comprising a pump, an infusion unit, a solenoid valve and a controller controlling the pump and the valve.

According to the preamble of claim 1, the machine object of the invention is of the type that comprises a pump group, for example a rotary pump, suitable for pumping an infusion fluid contained in a reservoir, and a dispensing group fluidically connected to the pump group and comprising or being coupleable to a filtration member suitable for containing an organic substance which is wettable by the infusion fluid so as to obtain the corresponding infusion beverage to be dispensed.

A flow adjustment solenoid valve operable for switching between a configuration of complete opening to allow the maximum passage of infusion fluid from the pump group to the dispensing group, a configuration of complete closure, to impede the passage of the infusion fluid, and at least one intermediate position, to partialize the flow of infusion fluid is fluidically interposed between the pump group and the dispensing group.

In particular, the intermediate configuration may be used to set a desired pressure and/or flow profile of the infusion fluid, which determines the mode of beverage extraction.

When the pump group is active and the flow adjustment solenoid valve is in an intermediate configuration, the machine operates in a mode also known by the term "low-flow."

For example, this machine operating mode is set in an initial phase (and possibly also in a final phase) of the dispensing cycle, precisely called, also in the remainder of the present disclosure, the "low-flow" phase.

For example, the machine may be configured to allow the user to select a beverage dispensing program among several programs or "recipes" that are available, or even to formulate a customized program, setting the duration of the various steps or operating modes of the machine, among them the "low-flow" program or phase.

In a known embodiment, for the adjustment of the flow, the machine is equipped with a dynamic adjustment system for dynamically adjusting the dispensing pressure that is constituted by at least three components: a proportional valve, an electronic control unit and a pressure transducer. The proportional valve allows to vary the pressure of the infusion fluid in such a way that a variation at the input of the valve is directly proportional to the variation at the output. In other words, the ratio between the pressure at the input and the pressure at the output is kept constant.

In some embodiments, the electronic control unit is programmed to create a closed loop control on the hydraulic circuit of the infusion fluid.

The pressure transducer detects the infusion fluid pressure value.

In this dynamic adjustment system of the dispensing pressure, the pump group supplies the proportional valve with the infusion fluid. Downstream of the valve the transducer is positioned, which detects the pressure value and sends said value to the electronic control unit. The latter, according to the value received from the transducer, modifies the pressure of the infusion fluid at the input of the proportional valve.

In a previous patent application from the same Applicant, a flow adjustment solenoid valve was proposed that is provided with a shutter which, when the solenoid valve is excited, is moved into a position of complete opening in order to allow the passage of the maximum flow of the infusion fluid. The solenoid valve is further provided with means of flow adjustment configured in such a way as to allow, when the solenoid valve is deactivated and the pump group is active, the partial raising of the shutter by the pressure exerted by the pump group on the infusion fluid in such a way as to partialize the flow rate of the fluid from the pump group to the dispensing group. In other words, the pressure of the pump group is capable of overcoming the force which tends to move the shutter into a position of complete closure. The result is that of having a reduced flow at the output of the solenoid valve, and, thus, the "low-flow" function.

Independently of the flow adjustment mode, the Applicant, following in-depth analysis of the behavior of the hydraulic circuit of the machine, realized that, when the machine operates in low-flow mode, turbulence arises in the hydraulic circuit that may cause malfunctions of the components of the machine, in particular of the solenoid valve.

The object of the present invention is that of proposing a machine of the aforementioned type that is capable of allowing the setting of various profiles of pressure and/or flow of the infusion fluid in the dispensing group, and thus extracting various flavors from the substance, maintaining an optimum functioning of the hydraulic circuit of the machine.

This object is achieved with a machine for dispensing an infusion beverage according to claim 1 and with a method for controlling a machine for dispensing an infusion beverage according to claim 7. The dependent claims describe preferred embodiments of the invention.

The features and advantages of the machine and method for dispensing the infusion beverage according to the invention will become apparent from the following detailed description of its preferred embodiments, given by way of non-limiting example, with reference to the accompanying figures, wherein:

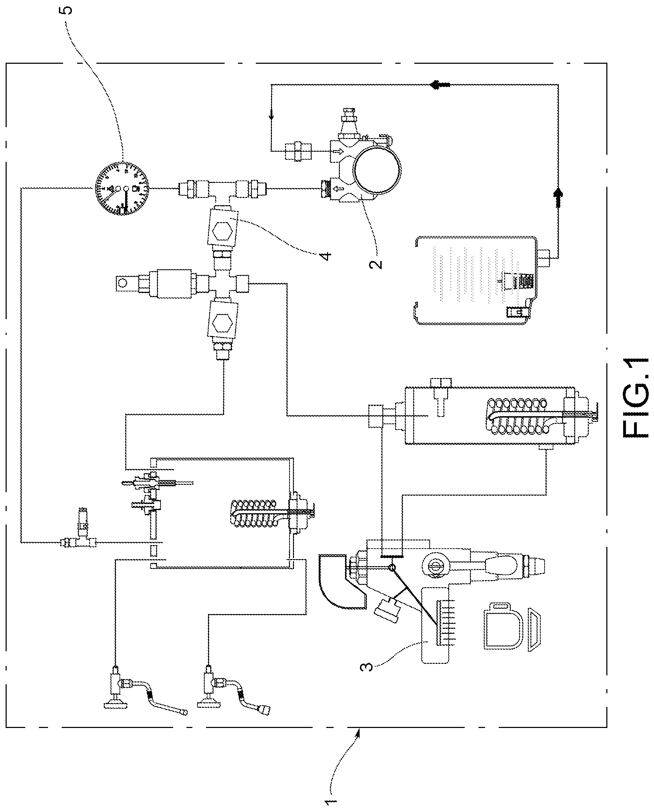

- Figure 1 is a hydraulic diagram of the machine for dispensing an infused beverage;
- Figure 2 is a flow chart of the steps of a beverage dispensing cycle according to the invention, in one embodiment;
- Figure 3 is a diagram that shows, as a function of the time, the pressure curve of the infusion fluid in the dispensing group and the dispensing curve, in grams, of the infused beverage, the curves being obtained with the dispensing cycle of Figure 2;
- Figure 4 is a flow chart of the steps of a beverage dispensing cycle that comprises a pre-infusion phase;
- Figure 5 is a diagram of the pressure and dispensing curves for the dispensing cycle of Figure 4;
- Figure 6 is a flow chart of the steps of a further possible beverage dispensing cycle according to the invention; and
- Figure 7 is a diagram of the pressure and dispensing curves for the dispensing cycle of Figure 6.

In said drawings, with 1 is indicated the hydraulic diagram of a machine for dispensing an infusion beverage according to the invention is indicated in its entirety.

In a general embodiment, the machine 1 is suitable for dispensing an infusion beverage, such as coffee, chamomile, tea or herbal tea. The machine 1 comprises a pump group 2, a dispensing group 3 and a flow adjustment solenoid valve 4.

The pump group 2 is, for example, a rotary pump, commonly used in machines for coffee, and it is suitable for pumping an infusion fluid. For example, the infusion fluid is water, or milk, an alcoholic beverage or a combination thereof.

The dispensing group 3 is arranged downstream of the pump group 2 and is fluidically connected thereto.

Furthermore, the dispensing group 3 comprises, or is connectable to, a filtration member suitable for containing an organic substance that is wettable by the infusion fluid so as to obtain the corresponding infusion beverage to be dispensed. In particular, the filtration member is a filter holder that contains within it a filter where the coffee is inserted.

The flow adjustment solenoid valve 4 is fluidically interposed between the pump group 2 and the dispensing group 3 so as to control the flow rate of the infusion fluid.

The machine 1 is equipped with an electronic control unit -not shown- that is programmed for commanding the pump group and the solenoid valve so as to control the dispensing of the infusion fluid.

In the remainder of the description, the following definitions related to the flow adjustment solenoid valve will be used:
- solenoid valve in completely open configuration: the solenoid valve allows the passage of the infusion fluid toward the dispensing group 3 with maximum possible flow;
- solenoid valve in completely closed configuration: the solenoid valve prevents the passage of the infusion fluid from the pump group 2 to the dispensing group 3;
- solenoid valve in intermediate opening configuration: the solenoid valve allows the infusion fluid to reach the dispensing group 3 with a partialized flow, that is, a flow which is reduced compared to maximum flow. This configuration may be obtained, for example, with a proportional solenoid valve, thus modulating the supply current that circulates in the solenoid. In other embodiments, the intermediate configuration may be obtained with a solenoid valve provided with a shutter and with means of flow adjustment configured in such a way as to allow, when the solenoid valve is deactivated, that is, in the absence of electrical supply, and the pump group is active, the partial raising of the shutter by the pressure exerted by the pump group on the infusion fluid in such a way as to partialize the flow rate of the fluid from the pump group to the dispensing group.

The solenoid valve 4 is commanded by the electronic control unit in order to alternatively assume the three configurations described above.

In the remainder of the description, the following definitions are further used in relation to the beverage extraction cycle controlled by the electronic control unit.
- "Pre-infusion and/or blooming" phase: is a phase of the cycle in which both the solenoid valve and the pump group are deactivated ("OFF"). It is a phase of pause within the dispensing cycle, during and thanks to which the beverage, for example the coffee, may develop flavors and "blossom" .
- "Low-flow" phase: in one or more of these steps of the extraction cycle, the pump group is active and the flow adjustment solenoid valve is, for most of the duration of this phase, in a configuration of intermediate opening, and therefore of partialized flow ("low-flow"). As will be described below, in the low-flow phase implemented by the machine according to the invention, the flow adjustment solenoid valve assumes, at the start of the low-flow phase and therefore before passing to the intermediate opening configuration which characterizes the true low-flow phase, the configuration of complete opening.
- "Full-flow" phase: the pump group is active and the solenoid valve is in a completely open configuration. In this phase, the dispensing of the body of the beverage occurs.

The present invention applies in particular to the beverage extraction cycles that comprise at least one low-flow phase.

According to one aspect of the invention, the electronic control unit is programmed, for example by the end user, to perform a low-flow phase, wherein the pump group is activated and, substantially in the same instant, the solenoid valve is commanded in such a way as to switch into the completely open configuration. After a predetermined time interval, the solenoid valve is commanded in such a way as to pass into the intermediate configuration until the low-flow phase is concluded, while the pump group remains active.

Note that, in a preferred embodiment, while the selection and possibly also the duration of the low-flow phase may be set by the user, the presence and the duration of the initial sub-phase, wherein the flow adjustment solenoid valve is in the completely open configuration, are transparent for the user and are set in the production phase of the machine, because they depend on the characteristics of the hydraulic circuit of the machine itself.

Some examples of infused beverage extraction cycles obtainable with dedicated control algorithms of the pump group and of the flow adjustment solenoid valve will be described, with reference to the attached drawings..

As mentioned above, these beverage extraction cycles may be set by the user, for example, through a selection among various predetermined cycles and recipes, or by setting the parameters that determine the extraction cycle steps defined above, for example their sequence and duration.

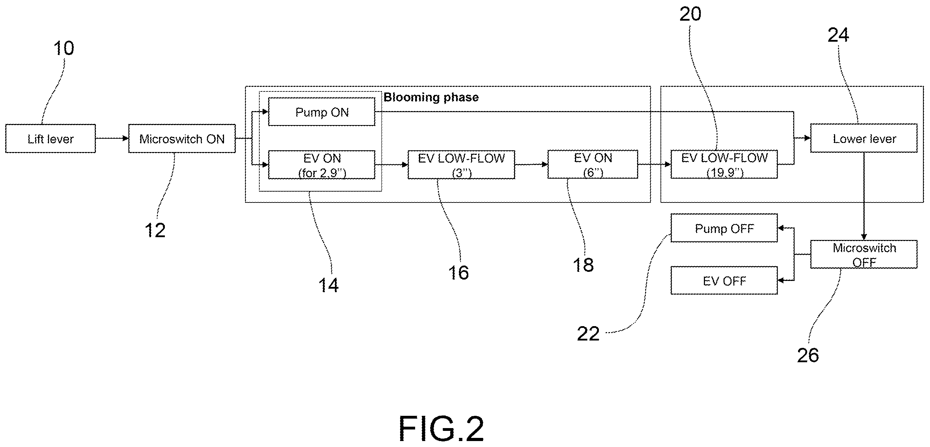

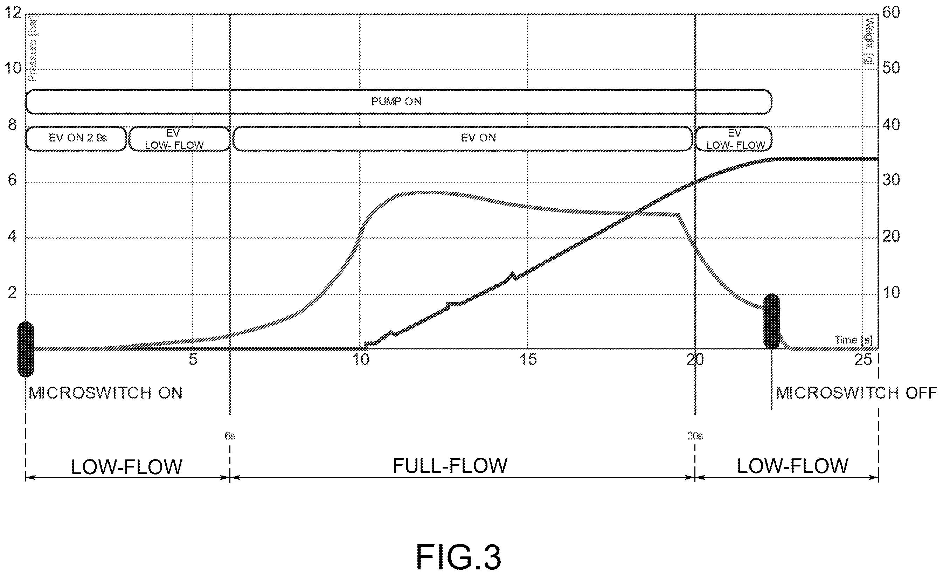

A first example of a dispensing cycle is represented in the flow chart of Figure 2 and in the diagram of the pressure and beverage dispensing curves of Figure 3. This dispensing cycle is characterized by an initial low-flow phase, which involves a slow rise of the pressure curve and a delayed start of the dispensing of the beverage, and by a final low-flow phase, which involves a slow descent of the pressure curve.

With reference to the flow chart of Figure 2, the cycle starts when the user, for example by means of a command lever (step 10), activates a microswitch (step 12), which causes the start of the pump group and the complete opening of the flow adjustment solenoid valve (step 14). The electronic control unit is programmed, for example, based on a recipe selected by the user and/or based on dispensing cycle parameters set by the user in order to implement the following control program of the pump group and of the solenoid valve.

After a predetermined time interval from the activation of the microswitch, between 0.5 seconds and 4 seconds, for example after 2.9 seconds, the solenoid valve is commanded in such a way as to assume the intermediate opening position (step 16).

For example, the solenoid valve is deactivated and a reduced flow still passes through the solenoid valve thanks to the pressure exerted by the pump group, which pressure wins the elastic means that act on the shutter of the solenoid valve for causing the closure of the solenoid valve.

The solenoid valve remains in the reduced-flow intermediate configuration for a predetermined time interval, for example for 3 seconds.

After a predetermined time interval, between 4 seconds and 8 seconds from the initial instant of activation, the solenoid valve is reactivated in such a way as to assume the completely open configuration (step 18). From this moment, the extraction cycle proceeds with a full-flow phase.

The solenoid valve remains active, for example, for 6 seconds.

After a predetermined time interval, between 15 seconds and 25 seconds, from the initial instant of activation, the solenoid valve is commanded again to assume the intermediate configuration in such a way as to carry the final phase of the cycle out in low-flow mode (step 20).

After a further time interval from the deactivation of the solenoid valve, for example about 20 seconds, the pump group is also deactivated (step 22).

As can be seen from the diagram of Figure 3, the initial instants of deactivation and reactivation of the solenoid valve are selected in such a way that the pressure of the infusion fluid at the instant of the reactivation of the solenoid valve is less than 3 bar, preferably less than 1 bar.

Therefore, in a first phase of the cycle, which lasts for example about 6 seconds from the activation of the microswitch, the pressure of the infusion fluid in the dispensing group increases very slowly.

This first phase is known as a phase of "blooming' or of "blossoming," wherein the organic substance contained in the filtration member is initially wetted by the infusion fluid.

In a second phase of the cycle, which starts when the solenoid valve is reactivated and which may last, for example, approximately 14 seconds, the pressure of the infusion fluid reaches the maximum value (for example, approximately 6 bar at approximately 10 seconds from the instant of the start of the cycle) and then decreases very slowly.

In the full-flow phase, for example, the pressure of the infusion fluid is between 2 and 7 bar.

When the pressure reaches the maximum value, the dispensing of the body of the beverage occurs. The beverage is therefore dispensed with a substantially constant flow.

When the solenoid valve assumes again the intermediate opening configuration while the pump group is still active, the final low-flow phase starts, wherein a more marked, but still progressive, decrease of the infusion fluid pressure down to, for example, about 2 bar occurs.

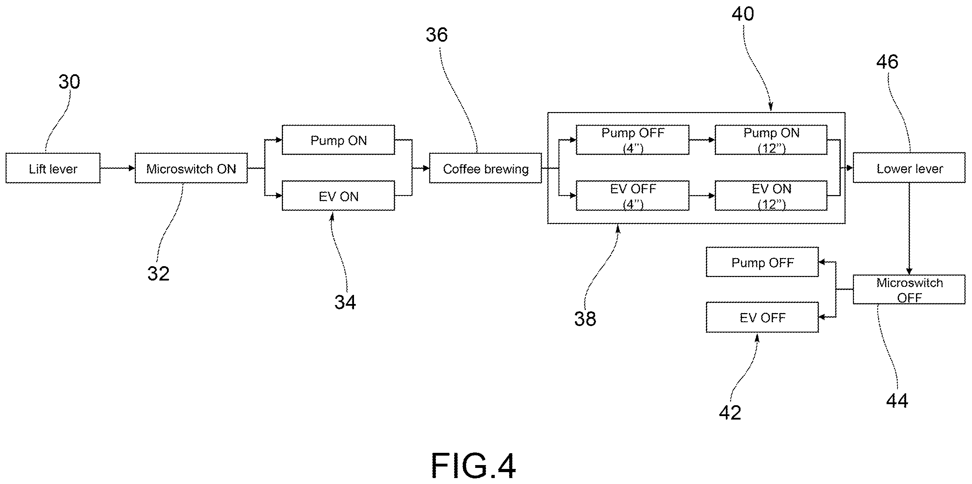

The cycle ends when the pump group is also deactivated by the microswitch (step 22). Such deactivation may occur following a command given by the user (step 24 in Figure 4) or in automatic mode by o the electronic control unit, based on the selected dispensing program.

The deactivation of the microswitch (step 26) also involves the definitive closure of the solenoid valve.

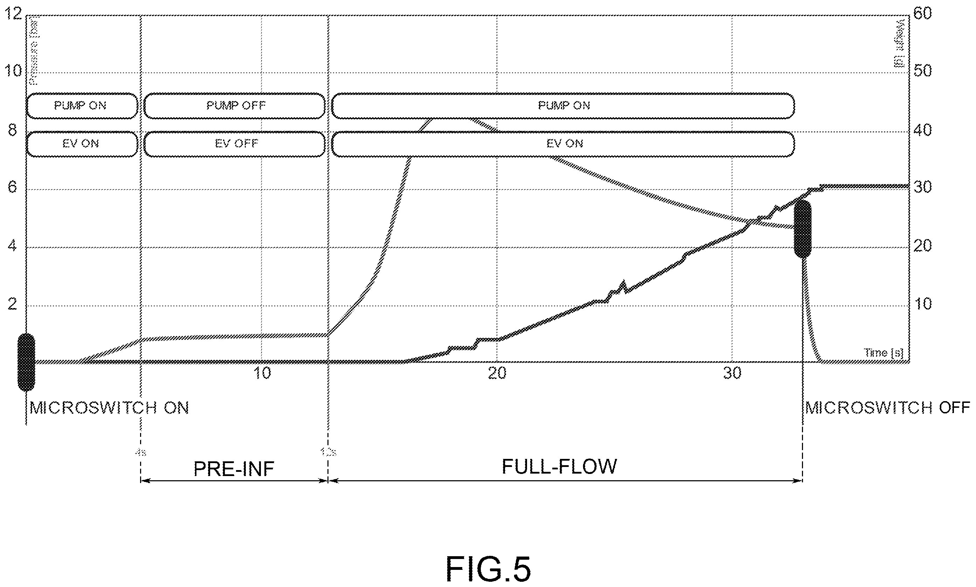

A second example of a dispensing cycle, which is not a part of the present invention, is represented in the flow chart of Figure 4 and in the diagram of the pressure and beverage dispensing curves of Figure 5. This dispensing cycle is characterized by a "pre-infusion and/or blooming" phase, wherein the pressure of the infusion fluid remains substantially constant at a low value, for example of about 1 bar, and the dispensing of the beverage may start with a few drops.

With reference to the flow chart of Figure 4, the cycle starts when the user, for example by means of a command lever (step 30), activates a microswitch (step 32), which causes the start-up of the pump group and the opening of the flow adjustment solenoid valve (phase 34). This entails the start of the extraction cycle (step 36).

The electronic control unit is programmed, for example, based on a recipe selected by the user and/or based on dispensing cycle parameters set by the user in order to implement the following control program of the pump group and of the solenoid valve.

After a set time interval between 1 seconds and 6 seconds, preferably of 4 seconds, from the initial instant of activation, both the solenoid valve and pump group are deactivated (step 38).

The solenoid valve and pump group remain deactivated, for example for 8 seconds.

After a set time interval between 8 seconds and 16 seconds, from the initial instant of activation, the pump group and the solenoid valve are activated (step 40) and remain active until the final deactivation.

The cycle ends when the pump group and solenoid valve are deactivated (step 42). For example, the deactivation is caused by the opening of the microswitch (step 44). Such deactivation may occur following a command given by the user (step 46) or in automatic mode by the electronic control unit, based on the selected dispensing program.

As may be noted from the diagram of Figure 5 in one embodiment, in the initial instant of deactivation of the solenoid valve and of the pump group, the pressure of the infusion fluid is equal to or less than about 1 bar.

In the pre-infusion and/or blooming phase, the pressure of the infusion fluid remains substantially constant, for example until about 12 seconds from the instant of the start of the cycle. The dispensing of the beverage may start with the falling of the first drops. The dispensing of the body of the beverage starts in the next full flow phase when the pump system is active and the solenoid valve is in the completely open configuration.

Following the reactivation of the pump group and of the solenoid valve, the true infusion phase starts, wherein the pressure of the infusion fluid reaches the maximum value (for example approximately 9 bar) in order to then decrease slowly.

The dispensing of the body of the beverage starts at, or a little before, the maximum point of the pressure, for example after approximately 15-18 seconds from the start of the cycle. The flow during the dispensing of the body of the beverage remains substantially constant in the dispensing phase.

In one embodiment, the final deactivation of the pump group and of the solenoid valve are substantially simultaneous.

Following the deactivation, the pressure of the infusion fluid rapidly goes to zero.

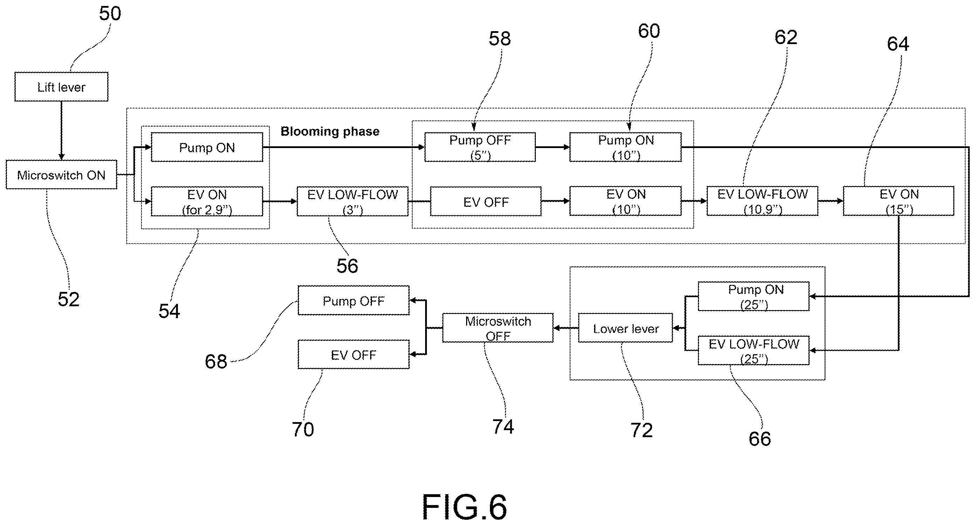

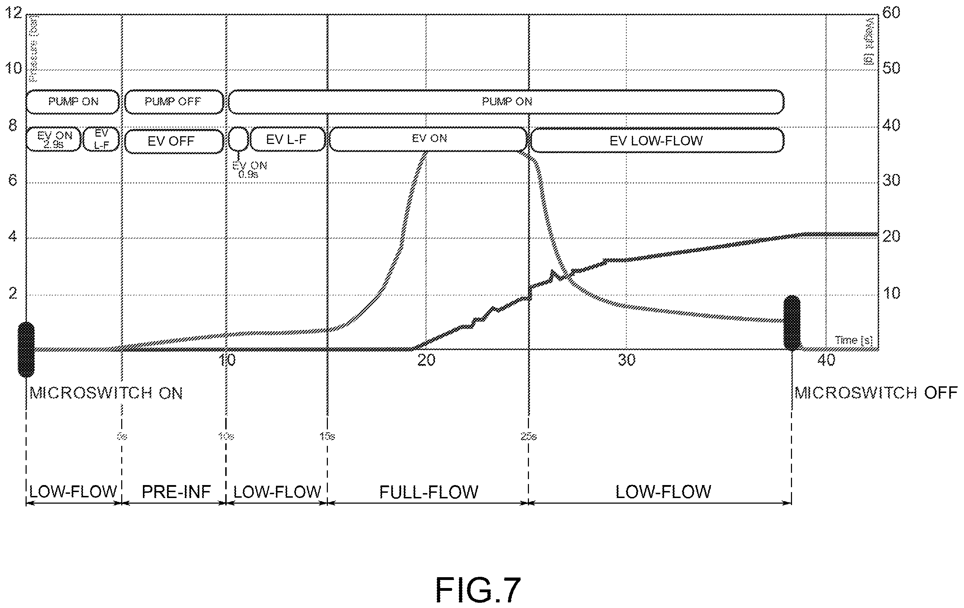

A third example of an extraction cycle, which is substantially the combination of the two previously described cycles, is represented in the flow chart of Figure 6 and in the diagram of the pressure and beverage dispensing curves of Figure 7.

This dispensing cycle provides, in succession: an initial low-flow phase, a pre-infusion phase, an intermediate low-flow phase, a full-flow phase, and a final low-flow phase.

With reference to the flow chart of Figure 6, the cycle starts when the user, for example by means of a command lever (step 50), activates a microswitch (step 52). The electronic control unit is programmed, for example, based on a recipe selected by the user and/or based on dispensing cycle parameters set by the user in order to implement the following control program of the pump group and of the solenoid valve.

Initially, both the pump group and the flow adjustment solenoid valve are powered, the valve therefore assumes the completely open configuration (step 54).

After a set time interval between 0.5 seconds and 4 seconds, for example 2.9 seconds, from the initial instant of activation, the solenoid valve switches to intermediate opening configuration (step 56).

After a set time interval between 3 seconds and 8 seconds, for example 5 seconds, from the initial instant of activation, both the pump group and the solenoid valve are deactivated in such a way as to start the pre-infusion phase (step 58).

The solenoid valve and the pump group remain deactivated for a set time interval, for example up to 10 seconds from the instant of the start of the cycle.

At the end of this time interval, both the pump group and the solenoid valve are simultaneously reactivated in such a way as to start an intermediate low-flow phase (step 60).

After a short predetermined time interval, for example between 0.5 seconds and 3 seconds, preferably 0.9 seconds, from the instant of reactivation of the pump group and of the solenoid valve, the solenoid valves switches to the intermediate opening configuration (step 62).

The solenoid valve remains in this configuration for a time interval between 10 seconds and 20 seconds from the initial instant of activation, after which it is moved back into complete opening for the start of the full-flow phase (step 64).

After a predetermined time interval between 20 seconds and 30 seconds, preferably 25 seconds, from the initial instant of activation, the solenoid valve is newly commanded to assume the intermediate opening configuration for the low-flow final phase (step 66).

After a further time interval, for example after 15 seconds, the pump group is also deactivated (step 68) for the conclusion of the cycle.

Also in this case, the final deactivation of the pump group and of the solenoid valve (step 70), caused for example by the opening of the microswitch (step 74), may occur following a command given by the user (step 72) or in automatic mode by the electronic control unit based on the selected dispensing program.

As is evident from the diagram of the pressure and beverage dispensing curves, in one embodiment, in the instant in which the first switching of the solenoid valve from the completely open configuration to the intermediate opening configuration occurs, the pressure of the infusion fluid is still substantially equal to zero.

In one embodiment, in the instant, selected by the user, in which the pre-infusion and/or blooming phase has started, the pressure of the infusion fluid still remains substantially equal to zero.

In one embodiment, in the instant in which the subsequent reactivation of the pump group and of the solenoid valve (start of the low-flow intermediate phase) occurs, the pressure of the infusion fluid is greater than 0 bar and less than or equal to 1 bar.

Between the end of the pre-infusion phase and the start of the beverage full-flow phase, the pressure of the infusion fluid remains substantially constant and less than or equal to 1 bar.

The body of the beverage is dispensed when the pressure of the infusion fluid is about to reach the maximum point. For example, the start of the dispensing occurs approximately 18-20 seconds from the start of the cycle. The flow of the infused beverage then remains substantially constant for about the next 10 seconds, and then slightly decreases when the pressure of the infusion fluid falls below 2 bar.

Further aspects and advantages of the machine according to the invention will now be highlighted.

The solenoid valve allows to adjust how much water enters into the group, and was developed to prevent vibrations. The extraction cycle is managed by the electronic control unit, which activates and deactivates the solenoid valve which is supplied, for example, by alternating current connected to a mechanical relay, so that the dispensing maintains all of its steps as set by the user.

In one embodiment, the pressure of the infusion fluid is shown on a pressure gauge 5.

In general, the "low-flow" function allows to automate the profiling, by acting on the flow of water.

As mentioned above, in the "blooming/pre-infusion phase", the water comes into contact with the organic substance, for example ground coffee, and releases any CO2 bubbles. The beverage starts to expand within the infusion chamber, that is, in the portafilter.

Blooming is a fundamental and preparatory phase for the subsequent infusion phase.

In the infusion phase, thanks to the blooming, the extraction of the body of the beverage is uniform, because the organic substance opposes the passage of the infusion fluid. The flow and pressure profile that the user selects to formulate will allow to extract different flavors from the beverage.

The last phase of the infusion cycle, or "tail," is important, because it may also involve the extraction of undesired substances. For this reason, the user has the possibility of varying the flow and, as a result, the pressure during the last phase of the beverage extraction.

The management software of the infusion cycle is designed in such a way that the performance of the machine is guaranteed in all of its configurations.

According to one aspect of the invention, the software allows to anticipate the need for water and therefore for pressure inside the hydraulic circuit present in the machine; in this way, the hydraulic circuit does not have any air bubbles and is ready to operate according to the time intervals set by the user.

This allows to absorb any turbulences that cause the vibration of the components of the machine, in particular of the solenoid valve.

As described in the examples recorded above, the control of the solenoid valve and of the pump group may intervene in various scenarios and configurations within the machine system:
- At the start of the dispensing, that is, in the blooming/pre-infusion steps, the solenoid valve resupplies the hydraulic circuit, thereby limiting the immediate drop in pressure (which is generated because the fluid present in the circuit tends to exit from the group). The duration of this phase is programmed in such a way that it is short enough both for limiting these phenomena of difference in pressure and for avoiding interferences with the set values of the subsequent low-flow phase.
- When the pump activates after the pre-infusion phase: during the pre-infusion, the pump group goes off; as a result, the hydraulic circuit is no longer powered and may be subject to fluctuations in terms of pressure and availability of infusion fluid within it. In this scenario, the solenoid valve, if the low-flow program is active, will activate, for example only for 0.9 seconds, in order to take the circuit back to its optimum service condition in order to be able to extract the beverage at the correct pressure.

For this reason, the solenoid valve opens for a limited period (designed on the basis of scenarios and use), always in correlation with the activation of the pump group (for example, at the start of the cycle, that is, before the pre-infusion, and upon reactivation of the pump, after the pre-infusion).

This activation and deactivation at specific intervals of the solenoid valve guarantees that all of the initially indicated steps occur during the dispensing of the beverage, from the blooming to the extraction tail.

A person skilled in the art may make several changes and adjustments to the embodiments of the machine for dispensing an infusion beverage according to the present invention and replace elements with other functionally equivalent ones in order to meet incidental needs, without departing from the scope of the following claims. Each of the features described as belonging to a possible embodiment may be obtained independently of the other described embodiments.

## Claims

1. A machine (1) for dispensing an infusion beverage, such as coffee, chamomile, tea, or herbal tea, comprising:
- a pump group (2), such as a rotary pump, suitable to pump an infusion fluid;
- a dispensing group (3) arranged downstream of the pump group (2) and fluidically connected thereto, said dispensing group (3) comprising, or being coupleable to a filtration member, suitable to contain an organic substance, wettable by the infusion fluid so as to obtain the corresponding infusion beverage to be dispensed;
- a flow adjustment solenoid valve (4) fluidically interposed between the pump group (2) and the dispensing group (3) and commandable for switching between an open configuration, wherein it allows the passage of the infusion fluid from the pump group to the dispensing group with maximum flow, a closed configuration, wherein it prevents the passage of the infusion fluid, and an intermediate configuration, wherein it allows the passage of the infusion fluid from the pump group to the dispensing group with partialized flow; and
- an electronic control unit programmed to command the pump group and the solenoid valve, **characterized in that** the control unit is programmed so as to control the dispensing of the infusion fluid for executing an extraction cycle of the beverage, the electronic control unit being programmed to execute a low-flow step, wherein the pump group is activated and, substantially simultaneously, the solenoid valve is commanded in order to switch into the open configuration, and wherein, after a predetermined time interval, the solenoid valve is commanded in order to pass into the intermediate configuration until the end of the low-flow step, while the pump group remains active.

2. A machine according to claim 1, wherein the electronic control unit is programmed to deactivate both the pump group and the flow control solenoid valve in order to execute a pre-infusion and/or blooming step, the electronic control unit being programmed to execute the low-flow step immediately before the pre-infusion step.

3. A machine according to claim 1 or 2, wherein the electronic control unit is programmed to deactivate both the pump group and the flow control solenoid valve in order to execute a pre-infusion and/or blooming step, the electronic control unit being programmed to execute the low-flow step immediately after the pre-infusion and/or blooming step.

4. A machine according to claim 1 or 2, wherein the electronic control unit is programmed to activate the pump group and command the flow adjustment solenoid valve for switching into the open position in order to execute a full-flow step, the electronic control unit being programmed to execute the low-flow step immediately before the full-flow step.

5. A machine according to claim 2, wherein, in the low-flow step, the solenoid valve remains in the open position for a time interval between 0.5 seconds and 4 seconds, preferably about 2.9 seconds.

6. A machine according to claim 3, wherein, in the low-flow step following the pre-infusion step, the solenoid valve remains in the open position for a time interval between 0.2 seconds and 3.9 seconds, preferably about 0.9 seconds.

7. A method for controlling a machine (1) for dispensing an infusion beverage, such as coffee, chamomile, tea or herbal tea, where the machine comprises a pump group, such as a rotary pump, suitable to pump an infusion fluid, a dispensing group arranged downstream of the pump group and fluidically connected thereto, said dispensing group, and a flow adjustment solenoid valve fluidically connected to the pump group and to the dispensing group in order to adjust the flow of the infusion fluid, to be supplied to the dispensing group, **characterized in that** the control method comprising the execution of a low-flow step, wherein the pump group is activated and, substantially simultaneously, the solenoid valve is commanded to take a completely open configuration, and wherein, after a predetermined time interval, the solenoid valve is commanded to pass into an intermediate opening configuration until the end of the low-flow step to allow the passage of a partialized flow while the pump group remains active.

8. A method according to claim 7, comprising the execution of a pre-infusion step, the low-flow step being carried out immediately before and/or immediately after the pre-infusion step.

9. A method according to claim 8, comprising the execution of a full-flow step, the low-flow step being carried out immediately before the full-flow step.

10. A method according to claim 8 or 9, wherein, in the low-flow step, the solenoid valve remains in the completely open position for a time interval between 0.5 seconds and 4 seconds, preferably about 2.9 seconds.

11. A method according to claim 8, wherein, in the low-flow step following the pre-infusion step, the solenoid valve remains in the open position for a time interval between 0.2 seconds and 3.9 seconds, preferably about 0.9 seconds.

## Patentansprüche

1. Maschine (1) zur Ausgabe eines Infusionsgetränks, wie Kaffee, Kamille, Tee oder Kräutertee, umfassend:
- eine Pumpengruppe (2), wie eine Kreiselpumpe, die geeignet ist, eine Infusionsflüssigkeit zu pumpen;
- eine Ausgabegruppe (3), die stromabwärts der Pumpengruppe (2) angeordnet ist und fluidisch damit verbunden ist, wobei die Ausgabegruppe (3) ein Filterelement umfasst oder damit koppelbar ist, das geeignet ist, eine organische Substanz aufzunehmen, die durch die Infusionsflüssigkeit benetzbar ist, um das entsprechende auszugebende Infusionsgetränk zu erhalten;
- ein Durchflusseinstellung-Magnetventil (4), das fluidisch zwischen der Pumpengruppe (2) und der Ausgabegruppe (3) angeordnet ist und ansteuerbar ist, um zwischen einer offenen Konfiguration, in der es den Durchfluss der Infusionsflüssigkeit von der Pumpengruppe zu der Ausgabegruppe mit Maximalfluss ermöglicht, einer geschlossenen Konfiguration, in der es den Durchfluss der Infusionsflüssigkeit verhindert, und einer Zwischenkonfiguration, in der es den Durchfluss der Infusionsflüssigkeit von der Pumpengruppe zu der Ausgabegruppe mit Teildurchfluss ermöglicht, zu wechseln; und
- eine elektronische Steuereinheit, die dazu programmiert ist, das Durchflusseinstellung-Magnetventil zu steuern, um die Ausgabe der Infusionsflüssigkeit zur Durchführung eines Extraktionszyklus des Getränks einzustellen, wobei die elektronische Steuereinheit dazu programmiert ist, einen Niederdurchfluss-Schritt auszuführen, in dem die Pumpengruppe aktiviert wird und das Magnetventil im Wesentlichen gleichzeitig angesteuert wird, um in die offene Konfiguration zu wechseln, und in dem das Magnetventil nach einem vorgegebenen Zeitintervall angesteuert wird, um in die Zwischenkonfiguration zu wechseln, bis das Ende des Niederdurchfluss-Schritts erreicht ist, während die Pumpengruppe aktiv bleibt.

2. Maschine nach Anspruch 1, bei der die elektronische Steuereinheit dazu programmiert ist, sowohl die Pumpengruppe als auch das Durchflusseinstellung-Magnetventil zu deaktivieren, um einen Vorinfusions- und/oder Blooming-Schritt durchzuführen, wobei die elektronische Steuereinheit dazu programmiert ist, den Niederdurchfluss-Schritt unmittelbar vor dem Vorinfusionsschritt durchzuführen.

3. Maschine nach Anspruch 1 oder 2, bei der die elektronische Steuereinheit dazu programmiert ist, sowohl die Pumpengruppe als auch das Durchflusseinstellung-Magnetventil zu deaktivieren, um einen Vorinfusions- und/oder Blooming-Schritt durchzuführen, wobei die elektronische Steuereinheit dazu programmiert ist, den Niederdurchflussschritt unmittelbar nach dem Vorinfusions- und/oder Blooming-Schritt durchzuführen.

4. Maschine nach Anspruch 1 oder 2, wobei die elektronische Steuereinheit dazu programmiert ist, die Pumpengruppe zu aktivieren und das Durchflusseinstellung-Magnetventil anzusteuern, um in die offene Stellung zu wechseln, um einen Vollfluss-Schritt durchzuführen, wobei die elektronische Steuereinheit dazu programmiert ist, den Niederdurchfluss-Schritt unmittelbar vor dem Vollfluss-Schritt durchzuführen.

5. Maschine nach Anspruch 2, wobei das Magnetventil, in dem Niederdurchfluss-Schritt, für ein Zeitintervall zwischen 0,5 Sekunden und 4 Sekunden, vorzugsweise etwa 2,9 Sekunden, in der offenen Stellung bleibt.

6. Maschine nach Anspruch 3, wobei das Magnetventil, in dem Niederdurchfluss-Schritt nach dem Vorinfusionsschritt für ein Zeitintervall zwischen 0,2 Sekunden und 3,9 Sekunden, vorzugsweise etwa 0,9 Sekunden, in der offenen Stellung bleibt.

7. Verfahren zum Steuern einer Maschine (1) zur Ausgabe eines Infusionsgetränks, wie Kaffee, Kamille, Tee oder Kräutertee, wobei die Maschine eine Pumpengruppe, wie eine Kreiselpumpe, umfasst, die geeignet ist, eine Infusionsflüssigkeit zu pumpen, eine Ausgabegruppe, die stromabwärts der Pumpengruppe angeordnet ist und fluidisch damit verbunden ist, und ein Durchflusseinstellung-Magnetventil, das fluidisch mit der Pumpengruppe und der Ausgabegruppe verbunden ist, um den Durchfluss der Infusionsflüssigkeit einzustellen, die der Ausgabegruppe zuzuführen ist,
**dadurch gekennzeichnet, dass**
das Steuerverfahren die Durchführung eines Niederdurchfluss-Schritts umfasst, in dem die Pumpengruppe aktiviert wird und im Wesentlichen gleichzeitig das Magnetventil angesteuert wird, um eine vollständig offene Konfiguration einzunehmen, und in dem das Magnetventil, nach einem vorgegebenen Zeitintervall, angesteuert wird, um in eine Zwischenöffnungskonfiguration zu wechseln, bis das Ende des Niederdurchfluss-Schritts erreicht ist, um den Durchfluss eines Teilflusses zu ermöglichen, während die Pumpengruppe aktiv bleibt.

8. Verfahren nach Anspruch 7, umfassend die Durchführung eines Vorinfusionsschritts, wobei der Niederdurchfluss-Schritt unmittelbar vor und/oder unmittelbar nach dem Vorinfusionsschritt durchgeführt wird.

9. Verfahren nach Anspruch 8, umfassend die Durchführung eines Vollflussschritts, wobei der Niederdurchfluss-Schritt unmittelbar vor dem Vollflussschritt durchgeführt wird.

10. Verfahren nach Anspruch 8 oder 9, wobei das Magnetventil in dem Niederdurchfluss-Schritt für ein Zeitintervall zwischen 0,5 Sekunden und 4 Sekunden, vorzugsweise etwa 2,9 Sekunden, in der vollständig offenen Stellung bleibt.

11. Verfahren nach Anspruch 8, wobei das Magnetventil in dem Niederdurchfluss-Schritt nach dem Vorinfusionsschritt für ein Zeitintervall zwischen 0,2 Sekunden und 3,9 Sekunden, vorzugsweise etwa 0,9 Sekunden, in der offenen Stellung bleibt.

## Revendications

1. Une machine (1) pour distribuer une boisson infusée, telle que café, camomille, thé ou tisane, comprenant :
- un groupe de pompe (2), tel qu'une pompe rotative, adapté à pomper un fluide d'infusion ;
- un groupe de distribution (3) disposé en aval du groupe de pompe (2) et relié fluidiquement à celui-ci, ledit groupe de distribution (3) comprenant, ou étant couplable à, un élément de filtration, apte à contenir une substance organique mouillable par le fluide d'infusion de manière à obtenir la boisson infusée correspondante à distribuer ;
- une électrovanne de régulation de débit (4) interposée fluidiquement entre le groupe de pompe (2) et le groupe de distribution (3) et pouvant être commandée pour passer entre une configuration ouverte, dans laquelle elle permet le passage du fluide d'infusion du groupe de pompe au groupe de distribution avec débit maximal, une configuration fermée, dans laquelle elle empêche le passage du fluide d'infusion, et une configuration intermédiaire, dans laquelle elle permet le passage du fluide d'infusion du groupe de pompe au groupe de distribution avec débit partiel ; et
- une unité de commande électronique programmée pour commander le groupe de pompe et l'électrovanne, **caractérisée en ce que** l'unité de commande este programmée de manière à commander la distribution du fluide d'infusion pour exécuter un cycle d'extraction de la boisson, l'unité de commande électronique étant programmée pour exécuter une étape à faible débit, dans laquelle le groupe de pompe est activé et, sensiblement simultanément, l'électrovanne est commandée pour passer dans la configuration ouverte, et dans laquelle, après un intervalle de temps prédéterminé, l'électrovanne est commandée pour passer dans la configuration intermédiaire jusqu'à la fin de l'étape à faible débit, tandis que le groupe de pompe reste actif.

2. Une machine selon la revendication 1, dans laquelle l'unité de commande électronique est programmée pour désactiver à la fois le groupe de pompe et l'électrovanne de régulation de débit afin d'exécuter une étape de pré-infusion et/ou de floraison, l'unité de commande électronique étant programmée pour exécuter l'étape à faible débit immédiatement avant l'étape de pré-infusion.

3. Une machine selon la revendication 1 ou 2, dans laquelle l'unité de commande électronique est programmée pour désactiver à la fois le groupe de pompe et l'électrovanne de régulation de débit afin d'exécuter une étape de pré-infusion et/ou de floraison, l'unité de commande électronique étant programmée pour exécuter **l'étape** à faible débit immédiatement après **l'étape** de pré-infusion et/ou de floraison.

4. Une machine selon la revendication 1 ou 2, dans laquelle l'unité de commande électronique est programmée pour activer le groupe de pompe et commander l'électrovanne de régulation de débit pour passer en position ouverte afin d'exécuter une étape à débit maximal, l'unité de commande électronique étant programmée pour exécuter l'étape à faible débit immédiatement avant l'étape à débit maximal.

5. Une machine selon la revendication 2, dans laquelle, dans l'étape à faible débit, l'électrovanne reste en position ouverte pendant un intervalle de temps compris entre 0,5 seconde et 4 secondes, de préférence environ 2,9 secondes.

6. Une machine selon la revendication 3, dans laquelle, dans l'étape à faible débit suivant l'étape de pré-infusion, l'électrovanne reste en position ouverte pendant un intervalle de temps compris entre 0,2 seconde et 3,9 secondes, de préférence environ 0,9 seconde.

7. Un procédé de commande d'une machine (1) pour distribuer une boisson infusée, telle que café, camomille, thé ou tisane, dans lequel la machine comprend un groupe de pompe, tel qu'une pompe rotative, apte à pomper un fluide d'infusion, un groupe de distribution disposé en aval du groupe de pompe et relié fluidiquement à celui-ci, ledit groupe de distribution, et une électrovanne de régulation de débit reliée fluidiquement au groupe de pompe et au groupe de distribution afin de régler le débit du fluide d'infusion devant être fourni au groupe de distribution,
**caractérisé en ce que**
le procédé de commande comprend l'exécution d'une étape à faible débit, dans laquelle le groupe de pompe est activé et, sensiblement simultanément, l'électrovanne est commandée pour adopter une configuration complètement ouverte, et dans laquelle, après un intervalle de temps prédéterminé, l'électrovanne est commandée pour passer dans une configuration d'ouverture intermédiaire jusqu'à la fin de l'étape à faible débit afin de permettre le passage d'un débit partiel tandis que le groupe de pompe reste actif.

8. Un procédé selon la revendication 7, comprenant l'exécution d'une étape de pré-infusion, l'étape à faible débit étant réalisée immédiatement avant et/ou immédiatement après l'étape de pré-infusion.

9. Un procédé selon la revendication 8, comprenant l'exécution d'une étape à débit maximal, l'étape à faible débit étant réalisée immédiatement avant l'étape à débit maximal.

10. Un procédé selon la revendication 8 ou 9, dans lequel, dans l'étape à faible débit, l'électrovanne reste en position complètement ouverte pendant un intervalle de temps compris entre 0,5 seconde et 4 secondes, de préférence environ 2,9 secondes.

11. Un procédé selon la revendication 8, dans lequel, dans l'étape à faible débit suivant l'étape de pré-infusion, l'électrovanne reste en position ouverte pendant un intervalle de temps compris entre 0,2 seconde et 3,9 secondes, de préférence environ 0,9 seconde.
